# EUROPÄISCHE PATENTANMELDUNG

(11) **EP 1 837 246 A1**
(43) Veröffentlichungstag der Anmeldung: **26.09.2007**
(21) Anmeldenummer: 07002037.5
(22) Anmeldetag: 31.01.2007
(51) Int. Cl.: B60R 19/34

(54) **Stossfängeranordnung mit Crashbox**

(30) Priorität: 21.03.2006 DE 102006013273
(71) Anmelder: Benteler Automobiltechnik GmbH, 33104 Paderborn (DE)
(72) Erfinder: Arns, Wilhelm, Dr., 33102 Paderborn (DE)
(74) Vertreter: Griepenstroh, Jörg

(57) **Zusammenfassung**

Eine Stoßfängeranordnung für den Front- oder Heckbereich eines Kraftfahrzeugs umfasst einen Stoßfängerquerträger (2), der an endseitig von Längsträgern (4) angeordneten Crashboxen (3) lösbar über wenigstens jeweils zwei sich in Hochrichtung des Kraftfahrzeugs erstreckende Bolzenverbindungen (5, 6) an der jeweiligen Crashbox (3) befestigt ist. Jeweils eine, eine Bohrung durchsetzende Bolzenverbindung jeder Crashbox (3) definiert eine Schwenkachse (S) des Stoßfängerquerträgers (2) und die wenigstens eine weitere Bolzenverbindung (6) ist in einem Langloch (7) angeordnet, das ein begrenztes Verschwenken des Stoßfängerquerträgers (2) um die Schwenkachse (S) ermöglicht. Dadurch werden bei einem Crash Beschädigungen von der Crashbox auf der dem Crash abgewandten Seite des Kraftfahrzeugs ferngehalten.

## Beschreibung

Die Erfindung betrifft eine Stoßfängeranordnung für den Front- oder Heckbereich eines Kraftfahrzeugs mit den Merkmalen im Oberbegriff des Patentanspruchs 1.

Stoßfängerquerträger leiten die bei einem Unfall auftretenden Anprallkräfte in Crashboxen ein, die endseitig von Längsträgern des Kraftfahrzeugs angeordnet sind, sodass die eingeleitete Energie lokal in den Crashboxen in Formungsenergie umgewandelt wird. Bei den heute üblichen Reparaturcrashtests wird ein Fahrzeug bei geringer Überdeckung mit niedriger Geschwindigkeit gegen eine Barriere gefahren. Aufgrund der relativ geringen Überdeckung ist es aus reparaturtechnischen und letztlich auch versicherungstechnischen Gründen wünschenswert, möglichst jeden Schaden von der Seite des Kraftfahrzeugs festzuhalten, die nicht gegen das Hindernis geprallt ist. Dies gilt auch für die im Wesentlichen nicht beanspruchte Crashbox auf der unbelasteten Seite.

Crashboxen können über Ein-Punkt-Anbindungen oder auch über Mehrpunkt-Anbindungen mit dem Stoßfängerquerträger verbunden sein. Typische Mehrpunkt-Anbindungen werden in der EP 1 234 729 A1 und in der WO 2004/113 131 A1 offenbart. Die Crashboxen sind über jeweils zwei sich in Hochrichtung des Kraftfahrzeugs erstreckende, parallel zueinander angeordnete Bolzenverbindungen mit dem Stoßfängerquerträger verbunden. Alternativ kann der Stoßfänger auch über jeweils einen Bolzen, d.h. über eine Ein-Punkt-Anbindung mit der jeweiligen Crashbox verbunden sein. Beispiele hierfür finden sich in der DE 102 34 045 A1 und in der DE 199 07 783 A1, in welchen zudem Langlöcher in dem Stoßfängerquerträger angeordnet sind, um eine Relativverlagerung des Stoßfängerquerträgers gegenüber wenigstens einer Crashbox zu ermöglichen. Derartige Ein-Punkt-Anbindungen mit Langlöchern an beiden Anbindungspunkten sind auch Gegenstand der EP 1 604 869 A1 sowie der FR 2 506 700. Zudem ist es bekannt, den Verbindungsbereich zwischen demStoßfängerquerträger und den Crashboxen so auszubilden, dass sich der Stoßfängerquerträger bei einem Anprall quer zur Fahrzeuglängsrichtung gegenüber den Crashboxen verschieben kann, ohne den Anbindungsbereich zu zerstören. In der JP 08 216 808 A werden entsprechende Führungselemente im Bereich der Stoßfängerquerträgeranbindung vorgeschlagen.

Es sind auch Lösungen bekannt, bei welchen die Stoßfängerquerträger über Schwenkarme beweglich gegenüber der Karosserie gelagert ist, wobei der Stoßfängerquerträger an Mitteln zur Energieabsorbierung abgestützt ist. Die Schwenkarme sind so ausgestaltet, dass eine Relativbewegung des Stoßfängerquerträgers gegenüber dem Kraftfahrzeug nicht behindert wird (DE 2 162 412 A).

Allerdings führt die crashbedingte Verwindung und Verdrehung des Stoßfängerquerträgers bei einer Mehrpunktanbindung an den jeweiligen Crashboxen auch zu einer Zerstörung des Anbindungsbereichs der unbelasteten Crashbox, so dass diese bei der Crashreparatur ausgetauscht werden muss.

Hiervon ausgehend liegt der Erfindung die Aufgabe zugrunde, eine Stoßfängeranordnung für den Front- oder Heckbereich eines Kraftfahrzeugs aufzuzeigen, welche geeignet ist, bei einem Zusammenstoß mit niedriger Überdeckung Beschädigungen durch plastische Verformung an der crashabgewandten Crashbox zu verhindern.

Diese Aufgabe ist bei einer Stoßfängeranordnung mit dem Merkmal des Patentanspruchs 1 gelöst.

Vorteilhafte Weiterbildungen des Erfindungsgedankens sind Gegenstand der Unteransprüche.

Wesentlich bei der erfindungsgemäßen Stoßfängeranordnung ist, dass der Stoßfängerquerträger trotz der Verwendung zweier parallel zueinander angeordneter Bolzenverbindungen schwenkbeweglich gegenüber den Crashboxen gelagert ist. Das wird dadurch erreicht, dass jeweils eine, eine Bohrung durchsetzende Bolzenverbindung der Crashbox eine Schwenkachse des Stoßfängerquerträgers definiert und die wenigstens eine weitere Bolzenverbindung in einem ein begrenztes Verschwenken des Stoßfängerquerträgers um die Schwenkachse ermöglichenden Langloch angeordnet ist. Durch die Ausbildung eines Langlochs, entweder an der Crashbox oder am Stoßfängerquerträger, kann der Stoßfängerquerträger bei einem Anprall bis zu einem gewissen Grad verschwenkt werden, ohne die dem Crash abgewandte Crashbox zu beschädigen. Dabei ist vorgesehen, dass der maximale Schwenkwinkel dann erreicht ist, wenn die crashseitige Crashbox vollständig gestaucht ist. Bei Schäden, die über eine vollständige Stauchung der crashseitigen Crashbox hinausgehen, ist in der Regel auch die dem Crash abgewandte Crashbox in Mitleidenschaft gezogen.

Insbesondere bei den sogenannten Low-Speed-Crashtests kommen die Vorteile der erfindungsgemäßen Stoßfängeranordnung sehr zum tragen, da es sich um eine häufige typische Crashform mit charakteristischem Schadensbild handelt und durch ihre Häufigkeit hohe Belastungen für die Kfz-Versicherungen mit sich bringt. Durch die Erfindung wird bei dieser typischen Crashform ein Beitrag dazu geleistet, dass ein Kraftfahrzeug aufgrund reduzierter Reparaturkosten in eine für den Halter günstigere versicherungstechnische Typklasse eingestuft wird.

Auch bei Crashs mit höheren Geschwindigkeiten und mittigem Anprall wirkt sich die bedingt durch das Langloch gegebene anfänglich höhere Nachgiebigkeit nicht nachteilig auf das Gesamtsystem der Stoßfängeranordnung aus, da die Ausbildung eines Langlochs nicht zu einer strukturellen Schwächung der gesamten Stoßfängeranordnung führt.

Darüber hinaus hat sich gezeigt, dass auch unter Ausbildung eines Langlochs die notwendige Struktursteifigkeit gegeben ist, um ein günstiges Schwingungsverhalten zu erreichen, gemäß den bei der Auslegung eines Kraftfahrzeugs zur Anwendung kommenden NVH-Tests (Noice, Vibration and Harshness).

In einer ersten Ausführungsform ist der Stoßfängerquerträger über jeweils zwei parallel zueinander angeordnete Bolzenverbindungen mit den jeweiligen Crashboxen verbunden, wobei jeweils die der Fahrzeugmittellängsebene zugewandte Bolzenverbindung, d.h. die jeweils innen liegende Bolzenverbindung die Schwenkachse definiert. Das heißt, die jeweils außen liegende Bolzenverbindung durchsetzt ein Langloch. Grundsätzlich ist auch eine umgekehrte Anordnung möglich. In diesem Fall müsste allerdings das Langloch der innen liegenden Bolzenverbindung nach vorne, d.h. in Fahrtrichtung weisen und nicht nach hinten, wie es bei der umgekehrten Anordnung der Fall ist. Dadurch ergibt sich jedoch bei einem Frontalanprall mit 100 %iger Überdeckung der Effekt, dass die innenliegende Bolzenverbindung zunächst nicht dazu beiträgt, Kräfte vom Stoßfängerquerträger auf die Crashbox zu übertragen. Das heißt, der Stoßfängerquerträger leitet sämtliche Kräfte in die außenliegende Bolzenverbindung ein oder verformt sich im Verlauf des Crashs soweit, bis auch die zweite Bolzenverbindung Kräfte in die Crashbox überträgt. Es wird daher als vorteilhafter angesehen, wenn die innenliegende Bolzenverbindung als Schwenkachse ausgebildet ist.

Grundsätzlich ist es auch möglich, den Stoßfänger über mehr als zwei parallel angeordnete Bolzenverbindungen mit der jeweiligen Crashbox zu verbinden.

Der Stoßfängerquerträger kann beispielsweise über jeweils drei parallel zueinander angeordnete Bolzenverbindungen mit den Crashboxen verbunden sein. In diesem Fall sollte die jeweils mittlere Bolzenverbindung die Schwenkachse definieren, während die beiden anderen Bolzenverbindungen in entsprechend orientierte, also in entgegengesetzte Richtungen weisende, Langlöcher greifen.

Wesentlich bei der Erfindung ist, dass die Langlöcher so lang bemessen sind, dass bei Stauchung einer Crashbox eine in einem Langloch der anderen Crashbox angeordnete Bolzenverbindung nicht zu Beschädigungen an der Crashbox führt, das heißt, dass eine plastische Verformung an dem Langloch der dem Crash abgewandten Crashbox verhindert wird. Hierbei es unerheblich, ob das Langloch in der Crashbox oder in dem Stoßfängerquerträger selbst angeordnet ist. Beide Varianten sind in diesem Zusammenhang denkbar.

Darüber hinaus wird es als zweckmäßig angesehen, wenn die in den Langlöchern angeordneten Bolzenverbindungen in der Soll-Lage des Stoßfängerquerträgers an einem äußeren Ende des Langlochs angeordnet sind. Beispielsweise kann dadurch bei einem Stoßfängerquerträger, der über zwei parallele Bolzenverbindungen mit einer crashseitigen Crashbox verbunden ist, sofort die gesamte Anprallkraft von dem Stoßfängerquerträger in die Crashbox eingeleitet werden, ohne dass sich der Stoßfängerquerträger gegenüber der Bolzenverbindung verlagern müsste.

Die Bolzenverbindung kann entweder einen hinreichend langen Bolzen umfassen, der gegenüberliegende, fluchtende Bohrungen oder Langlöcher durchsetzt. Alternativ kann der lange Bolzen auch durch zwei kürzere Einzelbolzen ersetzt werden, so dass jede Bolzenverbindung zwei Bolzen umfasst.

Die Erfindung wird nachfolgend anhand eines in den Zeichnungen dargestellten Ausführungsbeispiels näher erläutert.

Figur 1 zeigt in der Draufsicht eine Stoßfängeranordnung für den Frontbereich eines Kraftfahrzeugs;

Figur 2 zeigt einen Schnitt auf mittlerer Höhe durch die in der Bildebene linke Crashbox in etwas vergrößerter Darstellung.

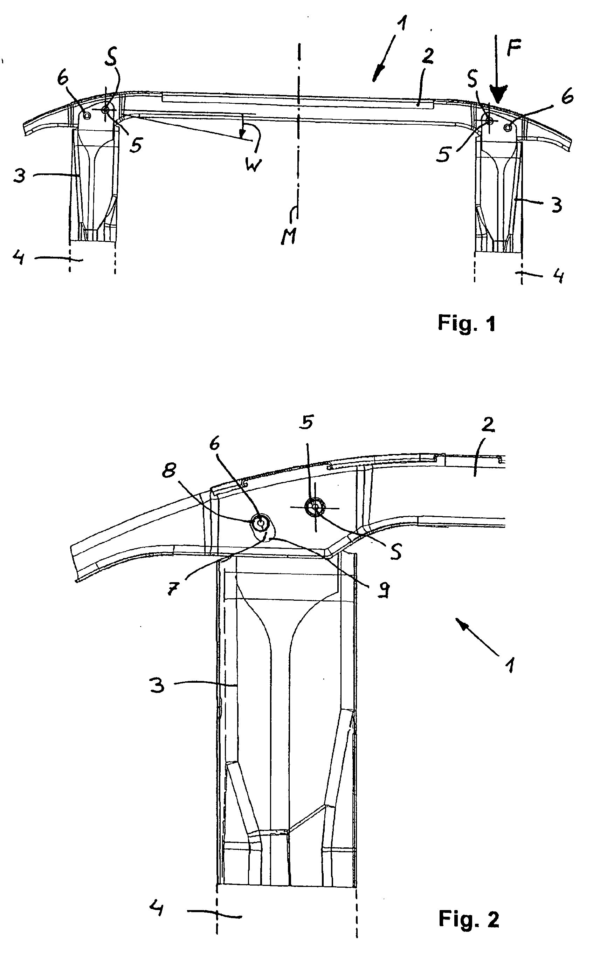

Figur 1 zeigt in der Draufsicht von oben eine Stoßfängeranordnung 1 für den Front- oder Heckbereich eines nicht näher dargestellten Kraftfahrzeugs. Die Stoßfängeranordnung 1 umfasst einen Stoßfängerquerträger 2, der an Crashboxen 3 befestigt ist. Die Crashboxen 3 befinden sich endseitig von Längsträgern 4 des Kraftfahrzeugs. Die Längsträger 4 sind nur andeutungsweise eingezeichnet, da sie für die nachfolgende Erläuterung des Erfindungsgedankens eine untergeordnete Rolle spielen.

Wie anhand der Figuren 1 und 2 zu erkennen ist, ist der Stoßfängerquerträger 2 in seinen Anbindungsbereichen an die Crashboxen 3 über jeweils zwei sich in Hochrichtung erstreckende Bolzenverbindungen 5, 6 mit der jeweiligen Crashbox 3 verbunden. Die Hochrichtung des Kraftfahrzeugs entspricht in diesem Fall der Senkrechten zur Bildebene. Die Bolzenverbindungen 5, 6 sind quer zur Fahrtrichtung nebeneinander angeordnet, wobei die einer Fahrzeugmittellängsebene M zugewandte Bolzenverbindung 5 in Fahrtrichtung gesehen etwas weiter vorne liegt als die jeweils äußere Bolzenverbindung 6.

Wesentlich bei der erfindungsgemäßen Stoßfängeranordnung 1 ist, dass die innen liegende Bolzenverbindung 5 Schwenkachsen S des Stoßfängerquerträgers 2 definieren. Selbstverständlich ist der Stoßfängerquerträger 2 fest mit den Crashboxen 3 verschraubt, damit die angreifenden Anprallkräfte, die beispielhaft durch den Pfeil F in der rechten Bildebene der Figur 1 angedeutet werden, in die Crashbox 3 eingeleitet werden. Bei der in Figur 1 dargestellten Krafteinleitung würde die in der Bildebene linke Crashbox 3 nicht gestaucht werden. Diese wird allerdings dadurch belastet, dass der Stoßfängerquerträger 2 beim Stauchen der in der Bildebene rechten Crashbox 3 um den Schwenkwinkel W verlagert wird. Dadurch wird an der in der Bildebene linken Crashbox die Bolzenverbindung 5 mit einer Kraft beaufschlagt, die in Richtung zur Crashbox weist. Die außen liegende Bolzenverbindung 6 hingegen überträgt eine Kraft auf die Crashbox 3, die in Fahrtrichtung weist. Dies hätte bei fest verschraubten Stoßfängerquerträgern eine Beschädigung der Crashbox 3 zur Folge.

Dieses Problem ist bei der erfindungsgemäßen Anordnung dadurch gelöst, dass die äußere Bolzenverbindung ein entsprechend ausgebildetes Langloch 7 in der Crashbox 3 durchsetzt. In Figur 2 ist zu erkennen, dass das Langloch 7 entgegen der Fahrtrichtung schräg nach hinten, das heißt in Richtung zum Längsträger 4 weist. Dadurch kann der Stoßfängerquerträger 2 um den in Figur 1 eingezeichneten Schwenkwinkel W verschwenkt werden. Die Bolzenverbindung 6 ändert dabei ihre relative Lage gegenüber dem Langloch 7, das heißt in der verschwenkten Stellung ist die Bolzenverbindung 6 nicht mehr an dem vorderen äußeren Ende 8 im Langloch positioniert, sondern vielmehr am hinteren äußeren Ende. Die Bolzenverbindung 6 selbst verändert ihre Lage selbstverständlich nicht, sondern nur das Langloch 7, das im Stoßfängerquerträger 2 ausgebildet ist.

### Bezugszeichen:

- 1 -: Stoßfängeranordnung
- 2 -: Stoßfängerquerträger
- 3 -: Crashbox
- 4 -: Längsträger
- 5 -: Bolzenverbindung
- 6 -: Bolzenverbindung
- 7 -: Langloch
- 8 -: vorderes äußeres Ende v. 7
- 9-: hinteres äußeres Ende v. 7

- F -: Anprallkraft
- M -: Fahrzeugmittellängsebene
- S -: Schwenkachse
- W-: Schwenkwinkel

## Patentansprüche

1. Stoßfängeranordnung für den Front- oder Heckbereich eines Kraftfahrzeugs mit einem Stoßfängerquerträger (2) der lösbar über wenigstens jeweils zwei sich in Hochrichtung des Kraftfahrzeugs erstreckende, parallel zueinander angeordnete Bolzenverbindungen (5, 6) an endseitig von Längsträgern (4) angeordneten Crashboxen (3) befestigt ist, **dadurch gekennzeichnet, dass** jeweils eine der parallel zueinander angeordneten Bolzenverbindungen (5) eine, eine Schwenkachse (S) des Stoßfängerquerträgers (2) definierende Bohrung durchsetzt und wobei die wenigstens eine weitere Bolzenverbindung (6) in einem ein begrenztes Verschwenken des Stoßfängerquerträgers (2) um die Schwenkachse (S) ermöglichenden Langloch (7) angeordnet ist.

2. Stoßfängeranordnung nach Anspruch 1, **dadurch gekennzeichnet, dass** der Stoßfängerquerträger (2) über jeweils zwei parallel zueinander angeordnete Bolzenverbindungen (5, 6) mit den Crashboxen (3) verbunden ist, wobei jeweils die der Fahrzeugmittellängsebene (M) zugewandte Bolzenverbindung (5, 6) die Schwenkachse (S) definiert.

3. Stoßfängeranordnung nach Anspruch 1, **dadurch gekennzeichnet, dass** der Stoßfängerquerträger (2) über jeweils drei parallel zueinander angeordnete Bolzenverbindungen mit den Crashboxen (3) verbunden ist, wobei die jeweils mittlere Bolzenverbindung die Schwenkachse (S) definiert.

4. Stoßfängeranordnung nach einem der Ansprüche 1 bis 3, **dadurch gekennzeichnet, dass** die Langlöcher (7) so lang bemessen sind, dass bei Stauchung einer Crashbox (3) eine in einem Langloch (7) angeordnete Bolzenverbindung (6) der anderen Crashbox (3) zerstörungsfrei verlagerbar ist.

5. Stoßfängeranordnung nach einem der Ansprüche 1 bis 4, **dadurch gekennzeichnet, dass** das Langloch (7) in der Crashbox (3) angeordnet ist.

6. Stoßfängeranordnung nach einem der Ansprüche 1 bis 5, **dadurch gekennzeichnet, dass** das Langloch (7) in dem Stoßfängerquerträger (2) angeordnet ist.

7. Stoßfängerquerträger nach einem der Ansprüche 1 bis 6, **dadurch gekennzeichnet, dass** die in den Langlöchern (7) angeordneten Bolzenverbindungen (6) in der Sollage des Stoßfängerquerträgers (2) an einem äußeren Ende (8) des Langlochs (7) angeordnet sind.

8. Stoßfängerquerträger nach einem der Ansprüche 1 bis 7, **dadurch gekennzeichnet, dass** die Bolzenverbindung (5, 6) einen einzigen Bolzen umfasst, der so lang ist, dass er einander gegenüberliegende Bohrungen oder Langlöcher (7) durchsetzt.

9. Stoßfängerquerträger nach einem der Ansprüche 1 bis 7, **dadurch gekennzeichnet, dass** jede Bolzenverbindung zwei kurze, fluchtend angeordnete Bolzen umfasst, die jeweils gegenüberliegende Bohrungen oder Langlöcher (7) durchsetzen.
